(19) Europäisches Patentamt / European Patent Office / Office européen des brevets

(11) **EP 3 114 442 B1**

(12) **FASCICULE DE BREVET EUROPEEN**

(45) Date de publication et mention de la délivrance du brevet:
**05.05.2021 Bulletin 2021/18**

(21) Numéro de dépôt: **15714581.4**

(22) Date de dépôt: **06.03.2015**

(51) Int Cl.:
*G01J 1/46* *(2006.01)*

(86) Numéro de dépôt international:
**PCT/FR2015/050553**

(87) Numéro de publication internationale:
**WO 2015/132539 (11.09.2015 Gazette 2015/36)**

(54) **CIRCUIT DE DETECTION D'UN RAYONNEMENT LUMINEUX**

LICHTSTRAHLERKENNUNGSSCHALTUNG

LIGHT-RAY DETECTION CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.03.2014 FR 1400561**

(43) Date de publication de la demande:
**11.01.2017 Bulletin 2017/02**

(73) Titulaire: **LYNRED**
**91120 Palaiseau (FR)**

(72) Inventeur: **MAILLART, Patrick**
**F-38140 La Murette (FR)**

(74) Mandataire: **Talbot, Alexandre et al**
**Cabinet Hecké**
**28 Cours Jean Jaurès**
**38000 Grenoble (FR)**

(56) Documents cités:
**WO-A1-2004/074789     US-A1- 2006 158 542**

EP 3 114 442 B1

## Description

## Domaine technique de l'invention

L'invention est relative à un circuit de détection comportant plusieurs gains de conversion.

## État de la technique

De manière conventionnelle, lorsqu'une scène est observée par un dispositif opto-électronique comportant un ou plusieurs photodétecteurs, chaque photodétecteur détecte le rayonnement lumineux et délivre un courant proportionnel à la partie de la scène observée. Le courant issu du photodétecteur est intégré au moyen d'un condensateur pendant une période de temps prédéfinie. Ainsi, à la fin de cette période, chaque pixel fournit une information sur la partie de la scène observée. Le détecteur pouvant être assimilé à un générateur de courant, la charge Q accumulée dans le condensateur peut être formulée de la manière suivante : Q=I.t où

Q représente la charge dans le condensateur,

I représente le courant aux bornes du condensateur,

t représente le temps de charge.

La quantité de charges Q accumulées dans le condensateur se traduit par l'apparition d'une différence de potentiel à ses bornes qui peut être formulée de la manière suivante : V = Q/C où

C représente la capacité électrique du condensateur,

V représente la différence de potentiel aux bornes du condensateur.

L'état d'une scène observée peut donc être suivi au moyen de la tension aux bornes d'un condensateur relié au détecteur.

De manière classique, le courant émis par le détecteur de rayonnement lumineux traverse un transistor de commande, de manière générale un interrupteur électronique, et atteint le condensateur. Le transistor de commande est un transistor de polarisation qui sert à polariser le photodétecteur de manière appropriée. Ces éléments sont connectés entre une masse et une première borne d'entrée d'un amplificateur différentiel. Une première borne du condensateur est connectée au transistor de polarisation et à une borne de l'amplificateur. Une seconde borne du condensateur est connectée directement à la première borne d'entrée de l'amplificateur et à un potentiel de référence. Le comparateur est alors capable de fournir sur sa borne de sortie S une information relative sur la tension aux bornes du condensateur.

Classiquement, lors de la réalisation d'un circuit intégré ou d'un pixel, les dimensions caractéristiques des différents composants sont limitées par des règles de dessins et de compatibilité. Tous les éléments du dispositif de détection sont donc configurés de manière à proposer un fonctionnement maximal dans la gamme d'utilisation prévue. De ce fait, le dispositif de détection est prévu pour fonctionner dans une gamme d'éclairement prédéfinie, (c'est-à-dire avec une intensité lumineuse donnée). Si le dispositif est utilisé hors des conditions prévues, par exemple avec un éclairement plus faible, un bruit important peut être introduit par le dispositif de détection. Si l'éclairement est trop important, le condensateur d'intégration est saturé et il est difficile de distinguer les différentes conditions d'illumination présentes

WO 2004/074789 A1 et US 2006/158542 A1 décrivent des dispositifs de détection connus comportant des photodétecteurs et des circuits de détection particuliers.

## Objet de l'invention

L'invention a pour objet un circuit de détection qui soit facile à mettre en œuvre, compact et qui délivre une information ayant un rapport signal à bruit élevé sur une plage de fonctionnement en illumination plus étendue.

Le circuit selon l'invention est défini par les revendications annexées et comporte notamment :

- un photodétecteur,
- un circuit de polarisation configuré pour polariser le photodétecteur,
- une charge capacitive d'intégration configurée pour stocker des charges électriques émises par le photodétecteur,
- une borne de sortie couplée à la charge capacitive d'intégration et destinée à être connectée à un circuit de traitement,

la charge capacitive d'intégration étant configurée pour présenter différentes valeurs de capacité électrique et comportant:

- au moins des première et deuxième lignes de transit montées en dérivation entre le photodétecteur et la borne de sortie, la première ligne de transit comprenant des premier et deuxième interrupteurs montés en série, la deuxième ligne de transit comprenant des troisième et quatrième interrupteurs montés en série,
- un premier condensateur ayant une première électrode connectée entre les premier et deuxième interrupteurs et une deuxième électrode connectée à une première source de tension prédéfinie,
- un deuxième condensateur ayant une électrode connectée entre les troisième et quatrième interrupteurs et une deuxième électrode connectée à une deuxième source de tension prédéfinie,
- un troisième condensateur monté en série avec un interrupteur spécifique entre une troisième source de tension prédéfinie et la connexion entre le premier interrupteur et le troisième interrupteur,
- des moyens de remise à zéro des premier, deuxième et troisième condensateurs indépendamment,

les première, deuxième et troisième sources de tension prédéfinie étant configurées pour délivrer la même tension et les moyens de remise à zéro des premier, deuxième et troisième condensateurs comportant un sixième interrupteur connecté entre la source de tension prédéfinie et la borne de sortie et un cinquième interrupteur connecté en parallèle du montage série formé par le troisième condensateur et l'interrupteur spécifique,

le dispositif comportant des moyens de contrôle des interrupteurs configurés pour réaliser au moins l'un des premier, deuxième et troisième modes de fonctionnement.

Selon le premier mode fonctionnement de l'invention, les moyens de contrôle des interrupteurs sont configurés de sorte que

-   les charges émises par le photodétecteur sont stockées dans le troisième condensateur,
-   les charges stockées dans le troisième condensateur sont équilibrées avec les premier et deuxième condensateurs montés en parallèle,
-   le circuit de traitement lit les informations stockées dans le premier et/ou le deuxième condensateurs.

Selon le deuxième mode de fonctionnement de l'invention, le circuit comporte des moyens de contrôle des interrupteurs configurés de sorte que

-   les charges émises par le photodétecteur sont stockées dans le troisième condensateur,
-   les charges stockées dans le troisième condensateur sont équilibrées avec le premier condensateur,
-   le troisième condensateur est déconnecté du premier condensateur et remis à zéro,
-   les charges émises par le photodétecteur sont stockées dans le troisième condensateur,
-   les charges stockées dans le troisième condensateur sont équilibrées avec le premier condensateur et dans le deuxième condensateur montés en parallèle et le circuit de traitement lit les informations enregistrées dans le premier condensateur et les informations stockées dans le premier et le deuxième condensateurs.

Selon le troisième mode de fonctionnement de l'invention, le circuit comporte des moyens de contrôle des interrupteurs configurés de sorte que

-   les charges émises par le photodétecteur sont stockées dans le troisième condensateur,
-   les charges stockées dans le troisième condensateur (C3) sont équilibrées avec le premier condensateur,
-   le troisième condensateur est déconnecté du premier condensateur et est remis à zéro,
-   les charges émises par le photodétecteur sont stockées dans le troisième condensateur,
-   les charges stockées dans le troisième condensateur (C3) sont équilibrées avec le deuxième condensateur, et de sorte que les informations stockées dans le premier condensateur durant au moins une partie du stockage des charges dans le deuxième condensateur sont lues, et les informations stockées dans le deuxième condensateur durant au moins une partie du stockage des charges dans le premier condensateur sont lues.

Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

-   la figure 1 représente schématiquement un circuit de détection particulier selon l'invention,
-   les figures 2 et 3 représentent, de façon schématique, une première configuration de de fonctionnement particulier d'un circuit de détection selon l'invention,
-   les figures 4 à 7 représentent différentes étapes d'une deuxième configuration de fonctionnement d'un circuit de détection selon l'invention,
-   les figures 8 à 10 représentent, de façon schématique, une troisième configuration de fonctionnement particulier d'un circuit de détection selon l'invention,
-   les figures 11 à 13 représentent, de façon schématique, une quatrième configuration de fonctionnement particulier d'un circuit de détection selon l'invention,
-   les figures 14 à 17 représentent, de façon schématique, une cinquième configuration de fonctionnement particulier d'un circuit de détection selon l'invention,
-   la figure 18 représentent, de façon schématique, une sixième configuration de fonctionnement particulier d'un circuit de détection selon l'invention,
-   les figures 19 et 20 représentent, de façon schématique, une septième configuration de fonctionnement particulier d'un circuit de détection selon l'invention.

**Description d'un mode de réalisation préférentiel de l'invention**

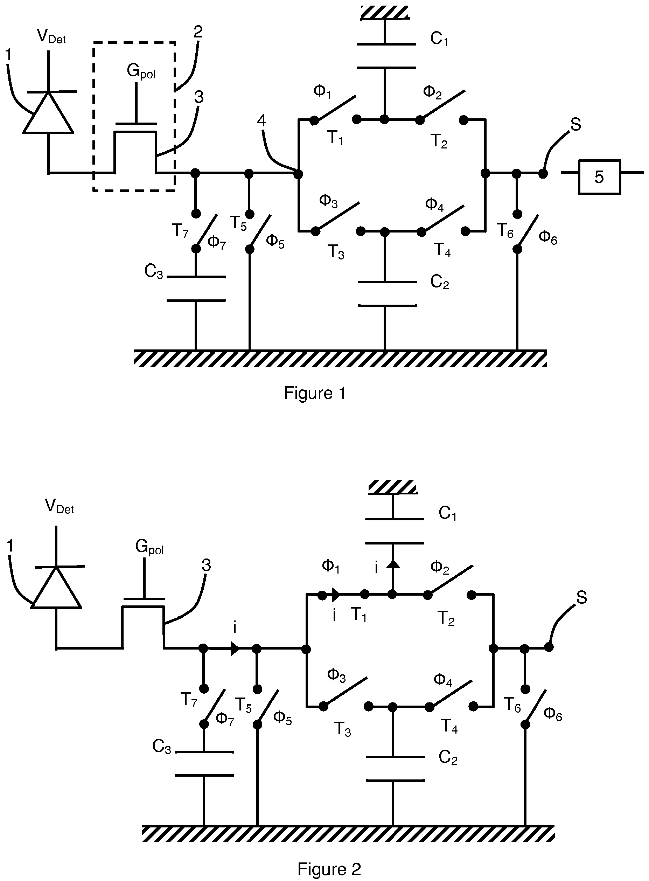

Comme illustré à la figure 1, le circuit de détection comporte de manière classique un détecteur 1 de rayonnement lumineux, c'est-à-dire un dispositif qui transforme un rayonnement lumineux en un courant électrique également appelé photodétecteur.

Le photodétecteur 1 est polarisé au moyen d'un circuit de polarisation 2. Un potentiel de polarisation $V_{Det}$ est appliqué sur une des bornes du photodétecteur 1. L'autre borne du photodétecteur 1 est polarisée au moyen du circuit de polarisation 2. Le photodétecteur 1 agit comme une source de courant.

Dans un mode de réalisation particulièrement avantageux, le circuit de polarisation 2 est de type injection directe. Le photodétecteur 1 est connecté en série avec un transistor de polarisation 3. Il est également envisageable d'utiliser un circuit de polarisation de type injection directe contre-réactionnée (Buffered Direct Injection en anglais).

Le photodétecteur 1 est couplé électriquement à une charge capacitive également appelée nœud de stockage 4. La charge capacitive d'intégration 4 est configurée pour stocker des charges électriques émises par le photodétecteur. Le nœud de stockage 4 est matérialisé sur la figure 1 par le nœud électrique de couplage de trois condensateurs distincts au moyen de trois interrupteurs distincts. Chacun des trois condensateurs est connecté au nœud de stockage 4 par l'intermédiaire d'un interrupteur spécifique qui peut être actionné indépendamment des autres interrupteurs.

Une première électrode des différents condensateurs est couplée électriquement avec le nœud de stockage 4. La deuxième électrode est couplée à une source de potentiel spécifique. Afin de faciliter le fonctionnement du circuit, il est avantageux d'appliquer le même potentiel sur toutes les deuxièmes électrodes des condensateurs. Dans les modes de réalisation illustrés, les deuxièmes électrodes sont couplées à la masse.

La charge capacitive 4 est couplée électriquement à une borne de sortie S du dispositif de détection au moyen de deux lignes de transit montées en dérivation. La borne de sortie S couplée à la charge capacitive d'intégration 4 est destinée à être connectée à un circuit de traitement 5.

Chacune des deux lignes de transit possède deux interrupteurs montés en série entre le photodétecteur 1 et la borne de sortie S. Les deux interrupteurs fonctionnent indépendamment dans une même ligne de transit et ils fonctionnement indépendamment des deux autres interrupteurs montés dans l'autre ligne de transit.

La première ligne de transit comporte des premier et deuxième interrupteurs T1 et T2 montés en série et qui sont respectivement commandés par les signaux Φ1 et Φ2.

Un premier condensateur C1 est connecté entre les premier et deuxième interrupteurs T1, T2 et une première source de tension prédéfinie. En d'autres termes, le premier condensateur C1 a une de ses électrodes couplée à la première ligne de transit entre les premier et deuxième interrupteurs T1 et T2. L'autre électrode est couplée à la première source de tension prédéfinie.

La deuxième ligne de transit comporte des troisième et quatrième interrupteurs T3 et T4 montés en série et qui sont respectivement commandés par les signaux Φ3 et Φ4.

Un deuxième condensateur C2 est connecté entre les troisième et quatrième interrupteurs T3, T4 et une deuxième source de tension prédéfinie. En d'autres termes, le deuxième condensateur C2 a une de ses électrodes couplée à la deuxième ligne de transit entre les troisième et quatrième interrupteurs T3 et T4. L'autre électrode est couplée à la deuxième source de tension prédéfinie.

Un troisième condensateur C3 est monté en série avec un interrupteur spécifique entre une troisième source de tension prédéfinie et la connexion entre le premier interrupteur T1 et le troisième interrupteur T3. Le troisième condensateur C3 est avantageux placé entre le photodétecteur 1 et le nœud commun des deux lignes de transit. De manière particulièrement avantageuse, le troisième condensateur C3 est placé entre le circuit de polarisation 2 et le nœud commun des deux lignes de transit. Le troisième condensateur C3 peut être couplé électriquement au photodétecteur 1 par l'intermédiaire d'un interrupteur spécifique.

Le dispositif comporte encore des moyens de remise à zéro des premier, deuxième et troisième condensateurs indépendamment. Dans un mode de réalisation particulier, les moyens de remise à zéro sont formés par des interrupteurs montés en parallèle des condensateurs. D'autres modes de réalisation plus avantageux car plus compacts seront présentés par la suite.

Lors d'une phase d'acquisition, le photodétecteur 1 émet des charges électriques qui sont stockées dans le nœud de stockage 4. Plus précisément, les charges électriques sont stockées dans au moins une des électrodes des condensateurs C1, C2, et C3 en fonction de l'état des interrupteurs associés.

Cette configuration est particulièrement avantageuse car la gamme de tension accessible sur la borne de sortie S peut être maintenue dans une gamme prédéfinie alors que les conditions d'illumination peuvent varier sur une gamme plus importante. Cette spécificité permet de connecter en sortie un seul circuit de traitement 5 qui est configuré pour recevoir le signal stocké dans la gamme de tension bien définie.

Cette configuration à trois condensateurs permet de former une charge capacitive 4 ayant au moins cinq valeurs différentes de capacité électrique. En d'autres termes, le nœud de stockage 4 peut être formé par au moins cinq condensateurs ou assemblages de condensateur ayant des valeurs différentes de gain pour maintenir la tension sur la borne de sortie S dans la gamme prédéfinie.

Une fois les charges stockées dans le nœud de stockage 4, ces dernières sont lues par le circuit de traitement 5 sous la forme d'une tension.

Dans une première période d'une première configuration illustrée à la figure 2, le premier interrupteur T1 est fermé de manière à autoriser le transfert des charges électriques depuis le photodétecteur 1 vers le premier condensateur 1. Les charges électriques sont représentées par le courant i. Le troisième interrupteur T3 est ouvert pour éviter un transfert des charges vers le deuxième condensateur C2.

Le deuxième interrupteur T2 peut être fermé ou ouvert durant la phase de transfert des charges vers le premier condensateur C1. Si le deuxième interrupteur T2 est fermé, le quatrième interrupteur T4 est ouvert pour éviter un transfert des charges vers le deuxième condensateur C2.

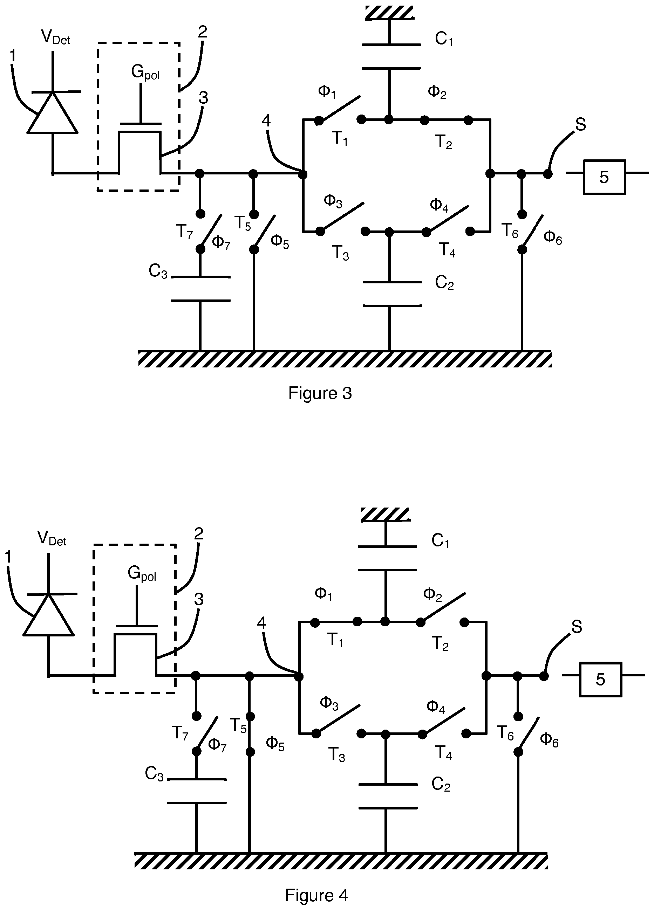

Ensuite comme illustré à la figure 3, la tension aux bornes du premier condensateur C1 agissant comme nœud de stockage 4 est mesurée par le circuit de traitement 5. Durant la phase de lecture de la tension, le deuxième interrupteur T2 est fermé. Le premier interrupteur T1 est avantageusement ouvert afin de ne pas fausser la lecture en introduisant de nouvelles charges électriques. Il est également avantageux d'ouvrir le troisième interrupteur T3.

Après la phase de lecture, l'information stockée dans le premier condensateur C1 est effacée en court-circuitant les bornes du premier condensateur C1.

Dans cette première configuration, l'information est en premier lieu stockée dans le premier condensateur C1 pour ensuite être lue par le circuit de traitement 5. Ensuite l'information est effacée.

De manière avantageuse, les première, deuxième et troisième sources de tension prédéfinie sont configurées pour délivrer la même tension. Il est alors préférable que les moyens de remise à zéro des premier, deuxième et troisième condensateurs comportent un cinquième interrupteur connecté en parallèle du montage série formé par le troisième condensateur C3 et l'interrupteur spécifique. Il est également avantageux que les moyens de remise à zéro comportent un sixième interrupteur T6 connecté entre la source de tension prédéfinie et la borne de sortie ou entre la source de tension prédéfinie et une des lignes de transit associée à son condensateur.

Pour effacer la donnée stockée dans le condensateur C1, il est particulièrement avantageux de connecter l'électrode couplée au nœud de stockage 4 avec le potentiel appliqué sur l'autre électrode. Dans une configuration particulièrement avantageuse, l'autre électrode est couplée à la source de potentiel spécifique (ici la masse) au moyen d'un interrupteur.

A titre d'exemple, il est possible de connecter un cinquième interrupteur T5 entre la source de potentiel spécifique et la borne commune des deux lignes de transit couplée au nœud stockage 4, c'est-à-dire du côté du photodétecteur 1. En variante, il est possible de connecter un sixième interrupteur T6 entre la source de potentiel spécifique et la borne commune des deux lignes de transit couplée au circuit de traitement 5.

Les cinquième et sixième interrupteurs T5 et T6 sont activés respectivement par les signaux Φ5 et Φ6. La remise à zéro du premier condensateur C1 est obtenue en activant simultanément le premier et le cinquième transistors T1 et T5 et/ou en activant simultanément le deuxième et le sixième transistors T2 et T6. Dans ce mode de réalisation, le gain est q/C1 avec q représentant une charge électrique donnée et C1 la valeur de capacité électrique du premier condensateur C1. Le gain est exprimé en V/électron.

Ce mode de fonctionnement est dit ITR (Integration Then Read) car pour enregistrer une nouvelle donnée dans le nœud de stockage 4, il faut avoir préalablement lu la donnée provenant de l'acquisition précédente.

En variante, il est possible de faire de même avec stockage dans le deuxième condensateur C2. Les actionnements des premier et troisième interrupteurs sont intervertis. Il en est de même pour les deuxième et quatrième interrupteurs. Ce mode de réalisation n'est pas illustré.

Si le deuxième condensateur C2 présente une valeur de capacité électrique différente de la valeur de capacité électrique du premier condensateur C1 cela permet de former un nœud de stockage avec un gain différent de ce qui est obtenu avec le condensateur C1. Dans ce mode de réalisation, le gain est q/C2 avec q représentant une charge électrique donnée et C2 la valeur de capacité électrique du deuxième condensateur C2.

La remise à zéro du deuxième condensateur C2 est obtenue en activant simultanément le troisième et le cinquième transistors T3 et T5 et/ou en activant simultanément le quatrième et le sixième transistors T4 et T6.

Dans un autre mode de fonctionnement, il est possible de faire fonctionner le circuit de détection avec une fréquence de lecture plus importante sans dégradation des performances. Dans ce mode de fonctionnement, les données sont stockées alternativement entre le premier condensateur C1 et le deuxième condensateur C2. La lecture des données stockées est également réalisée alternativement en décalage d'une demie période de sorte que la lecture de l'information stockée dans le premier condensateur C1 est réalisée durant l'écriture de données dans le deuxième condensateur C2. Ensuite, la lecture de l'information stockée dans le deuxième condensateur C2 est réalisée durant l'écriture de données dans le premier condensateur C1. Ce mode de réalisation est particulièrement intéressant si les premier et deuxième condensateurs C1 et C2 présentent la même valeur de capacité électrique. Dans ce cas, le circuit de traitement 5 fait abstraction des informations sur le condensateur qui est lu. Dans le cas où les valeurs de capacité électrique des deux condensateurs sont différentes, le traitement est possible en corrigeant la valeur de la donnée lue par un algorithme dans le circuit de traitement. Il faut alors informer le circuit de traitement avec une donnée supplémentaire indiquant si la lecture est réalisée sur le premier ou le deuxième condensateur afin de lui associer la bonne valeur de capacité électrique.

Dans un mode de fonctionnement particulièrement avantageux, le procédé peut être décrit de la manière suivante.

Dans une première période de temps illustrée à la figure 4, les charges électriques présentes dans le premier condensateur C1 sont effacées. La remise à zéro est réalisée en fermant simultanément le premier et le cinquième interrupteurs T1 et T5. Le troisième interrupteur T3 est ouvert.

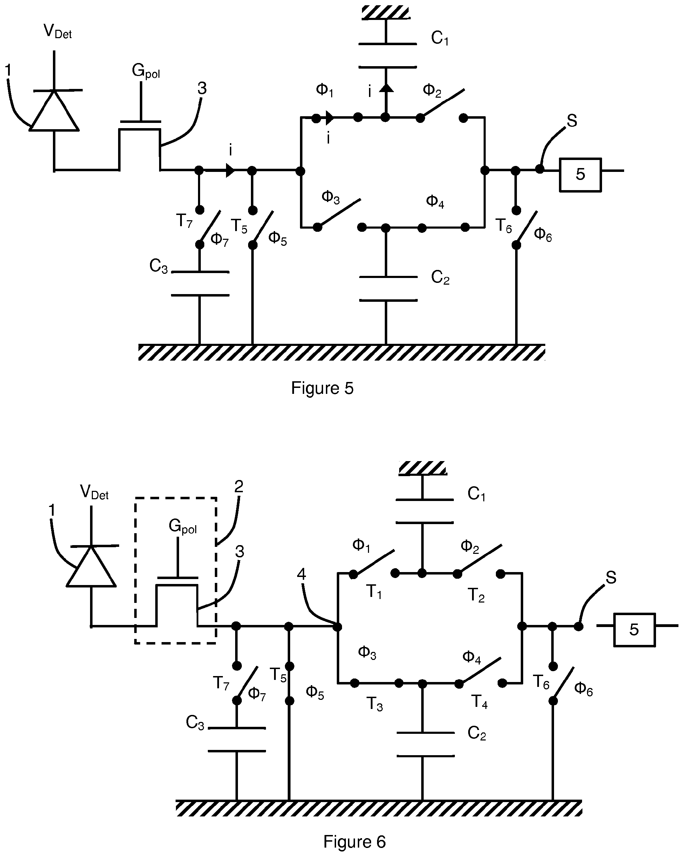

Dans une deuxième période de temps illustrée à la figure 5, les charges électriques émises par le photodétecteur 1 sont stockées dans le premier condensateur C1. Le premier interrupteur T1 est fermé. Le troisième interrupteur T3 est ouvert. Durant la deuxième période de temps ou durant au moins une partie de cette deuxième période, il est avantageux d'ouvrir le deuxième interrupteur T2 et de fermer le quatrième interrupteur T4 de manière à autoriser la lecture de l'information stockée dans le deuxième condensateur C2.

Dans une troisième période de temps illustrée à la figure 6, les charges électriques présentes dans le deuxième condensateur C2 sont effacées. La remise à zéro est réalisée en fermant simultanément le troisième et le cinquième interrupteurs T3 et T5. Le premier interrupteur T1 est ouvert.

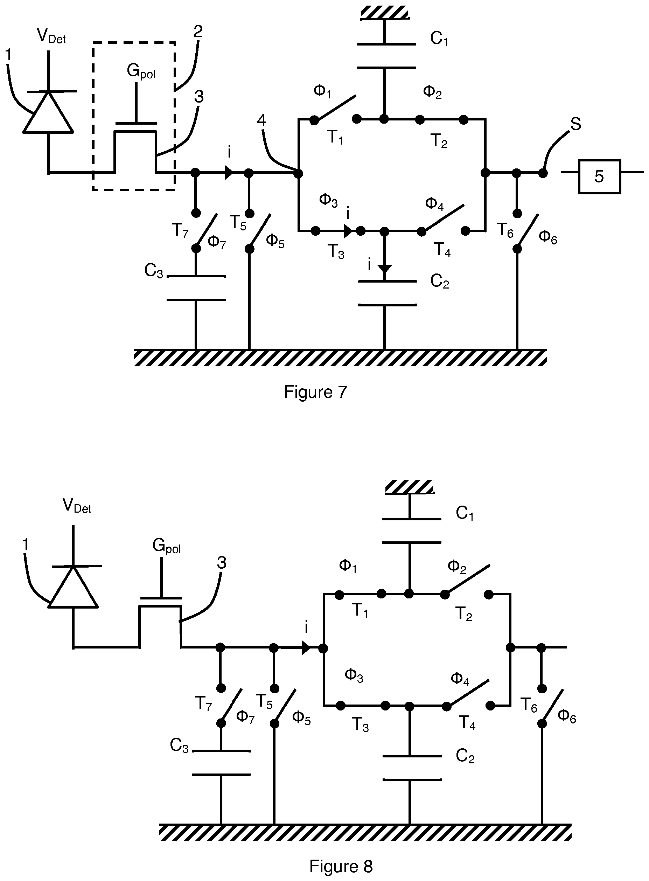

Dans une quatrième période de temps illustrée à la figure 7, les charges électriques émises par le photodétecteur 1 sont stockées dans le deuxième condensateur C2. Le troisième interrupteur T3 est fermé. Le premier interrupteur T1 est ouvert. Durant la quatrième période de temps ou durant au moins une partie de cette quatrième période, il est avantageux de fermer le deuxième interrupteur T2 et d'ouvrir le quatrième interrupteur T4 de manière à autoriser la lecture de l'information stockée dans le premier condensateur C1.

En variante, la lecture des données dans le condensateur C1 est séparée de l'acquisition réalisée dans le condensateur C2 et inversement.

Dans un autre mode de fonctionnement, il est possible de faire fonctionner le dispositif avec un gain différent en mettant en parallèle les premier et deuxième condensateurs C1 et C2.

Dans cette configuration, les deux condensateurs C1 et C2 sont connectés au nœud 4 et reçoivent les charges émises par le photodétecteur 1. Ensuite l'information stockée est lue par le circuit de traitement 5 et l'information est effacée pour autoriser un nouveau stockage de charges électriques dans les condensateurs C1 et C2.

Les premier et troisième interrupteurs T1 et T3 peuvent recevoir le même signal de manière à fonctionner en synchronisme. Il peut en être de même pour les deuxième et quatrième interrupteurs T2 et T4.

Durant une première période illustrée à la figure 8, le premier interrupteur T1 est fermé ce qui autorise le transit des charges électriques depuis le photodétecteur 1 vers le premier condensateur C1. Durant la première période ou à la fin de la première période, le troisième interrupteur T3 et/ou les deuxième et quatrième interrupteurs sont fermés de manière à permettre un transit des charges électriques vers le deuxième condensateur C2. De cette manière, il y a un équilibre des charges électriques entre les condensateurs C1 et C2.

De manière avantageuse, le troisième interrupteur T3 est fermé durant toute la première période ou à la fin de la première période.

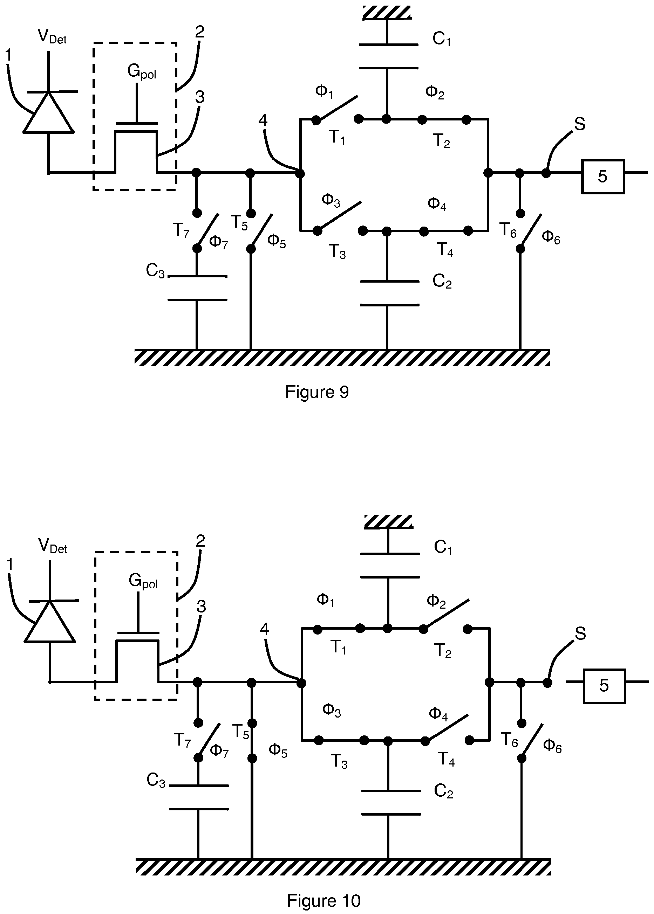

Dans une deuxième période illustrée à la figure 9, l'information stockée dans les condensateurs C1 et C2 est lue par le circuit de traitement 5. Le deuxième interrupteur T2 et/ou le quatrième interrupteur T4 sont fermés. Les condensateurs C1 et C2 agissent comme nœud de stockage 4.

De manière avantageuse, durant la deuxième période, le premier interrupteur T1 et le troisième interrupteur T3 sont ouverts pour éviter un transfert de charges électriques à partir du photodétecteur 1.

Dans une troisième période illustrée à la figure 10, les charges électriques stockées dans les condensateurs C1 et C2 sont éliminées. La remise à zéro des condensateurs peut être réalisée en fermant simultanément le premier et le troisième interrupteurs T1 et T3 et en fermant le cinquième interrupteur T5.

Dans une variante de réalisation non représentée, le premier interrupteur T1 ou le troisième interrupteur T3 est fermé en même temps que les deuxième et quatrième interrupteurs T2 et T4 pour réaliser la remise à zéro des condensateurs C1 et C2. Le cinquième interrupteur T5 est également fermé.

La remise à zéro peut également être réalisée au moyen de la fermeture du sixième interrupteur T6. Dans ce cas, le fonctionnement décrit pour les premier et troisième interrupteurs est transposé aux deuxième et quatrième interrupteurs et inversement.

Dans ce mode de réalisation, le gain du nœud de stockage est q/(C1+C2).

Alors que dans les modes de réalisation précédents, le troisième condensateur C3 était découplé du photodétecteur, dans un autre mode de fonctionnement, le troisième condensateur C3 est couplé électriquement au nœud de stockage par l'intermédiaire d'un septième interrupteur T7.

Dans les modes illustrés, le troisième condensateur C3 est connecté entre le photodétecteur 1 et le nœud de connexion des deux chemins de transit.

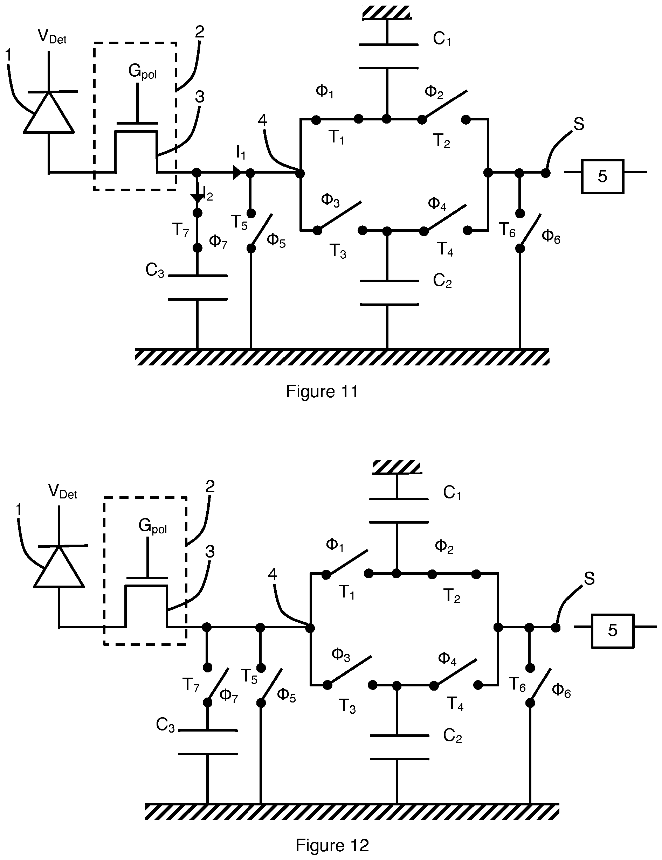

Durant une première période de temps illustrée à la figure 11, le premier et le septième interrupteurs T1 et T7 sont fermés ce qui autorise un stockage des charges électriques dans les condensateurs C1 et C3. Les deux condensateurs sont montés en parallèle. Il est particulièrement avantageux d'avoir un troisième condensateur C3 qui présente une valeur de capacité électrique nettement supérieure à la valeur de capacité électrique du premier condensateur C1. De manière avantageuse, le rapport de capacité entre les condensateurs C1 et C3 est compris entre 1 et 4 de préférence entre 2 et 3. La capacité électrique du condensateur C1 peut être plus faible ou plus importante que celle du condensateur C3. Il peut en être de même entre les condensateurs C2 et C3.

Les troisième et quatrième interrupteurs sont ouverts pour éviter un transit des charges électriques vers le deuxième condensateur C2. Le quatrième interrupteur T4 peut être fermé si le deuxième interrupteur T2 est ouvert et inversement.

Lors du transfert des charges électriques à partir du photodétecteur 1, il y a équilibre des charges entre les condensateurs C1 et C3. Les deux condensateurs partagent la même information.

Dans une deuxième période illustrée à la figure 12, le premier interrupteur T1 est ouvert et l'information stockée dans le premier condensateur C1 est lue par le circuit de traitement 5. Le deuxième interrupteur T2 est fermé.

Durant la deuxième période, le quatrième interrupteur T4 est ouvert.

Lors de la lecture, le circuit de traitement 5 n'a pas accès au troisième condensateur C3, l'état du septième interrupteur T7 n'est pas important.

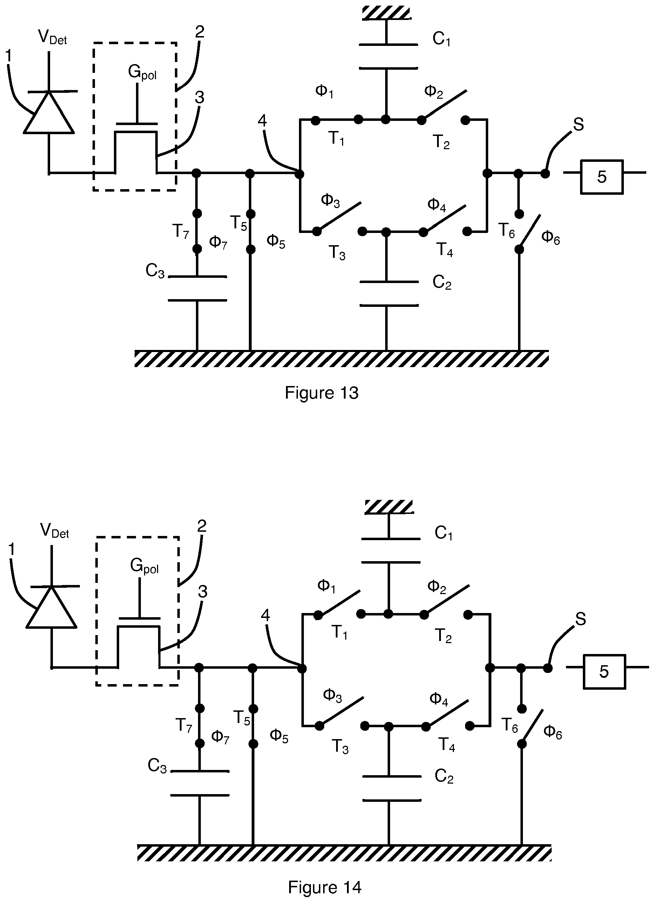

Une fois la lecture réalisée, l'information stockée dans les deux condensateurs C1 et C3 est effacée. La remise à zéro peut être réalisée en fermant simultanément le premier interrupteur T1, le cinquième interrupteur T5 et le septième interrupteur T7 comme cela est représenté à la figure 13. En variante, il est possible de réaliser la remise à zéro en fermant simultanément le premier interrupteur T1, le deuxième interrupteur T2, le sixième interrupteur T6 et le septième interrupteur T7. Il est également possible de fermer le cinquième et le septième interrupteurs d'un côté et de fermer le deuxième et le sixième interrupteurs d'un autre côté. Le premier interrupteur T1 peut être placé à l'état fermé ou ouvert.

Il est possible de faire fonctionner le circuit de détection avec une fréquence de lecture plus importante sans dégradation des performances en stockant les données alternativement entre le premier condensateur C1 et le deuxième condensateur C2. La lecture des données stockées est également réalisée alternativement en décalage d'une demie période de sorte que la lecture de l'information stockée dans le premier condensateur C1 soit réalisée durant l'écriture des données dans le deuxième condensateur C2. Ensuite, la lecture de l'information stockée dans le deuxième condensateur C2 est réalisée durant l'écriture des données dans le premier condensateur C1.

Comme précédemment, ce mode de réalisation est particulièrement intéressant si les premier et deuxième condensateurs C1 et C2 présentent la même valeur de capacité électrique. Dans ce cas, le circuit de traitement 5 fait abstraction d'informations sur le condensateur qui est lu. Dans le cas où les valeurs de capacité électrique des deux condensateurs C1 et C2 sont différentes, le traitement est possible en corrigeant la valeur de la donnée lue par un algorithme dans le circuit de traitement 5. Il faut alors informer le circuit de traitement 5 avec une donnée supplémentaire indiquant si la lecture est réalisée sur le premier ou le deuxième condensateur afin de lui associer la bonne valeur de capacité électrique.

Dans un mode de fonctionnement particulièrement avantageux, le procédé peut être décrit de la manière suivante.

Durant une première période de temps illustrée à la figure 14, le troisième condensateur C3 est remis à zéro en fermant simultanément le cinquième et le septième interrupteurs T5 et T7. Le premier interrupteur T1 est ouvert.

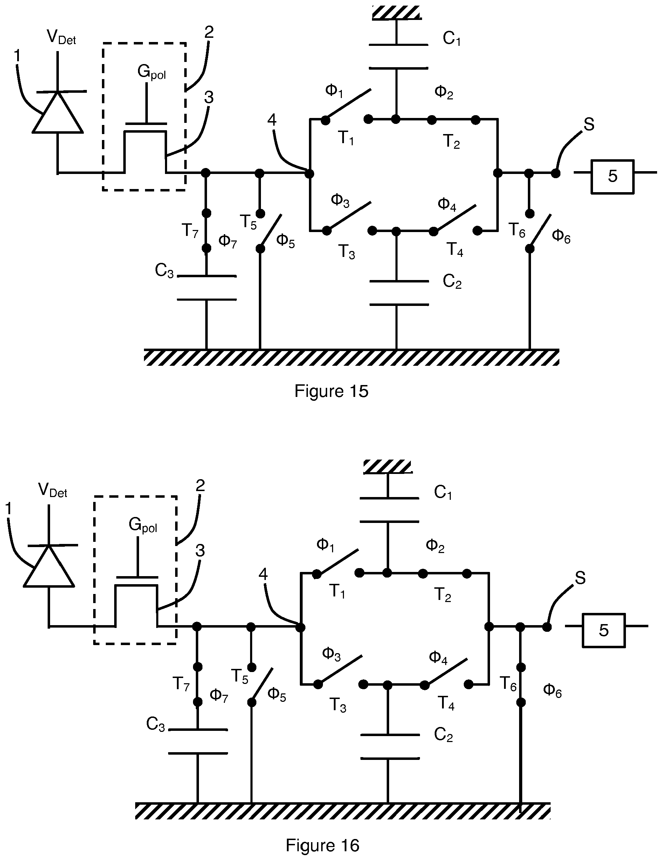

Dans une deuxième période de temps illustrée à la figure 15, le septième interrupteur T7 est fermé et les premier et troisième interrupteurs T1 et T3 sont ouverts ce qui autorise un stockage des charges électriques dans le condensateur C3 uniquement. L'acquisition des données sur la scène observée est faite dans le condensateur C3.

Durant au moins une partie de la deuxième période de temps, le deuxième interrupteur T2 est fermé ce qui autorise la lecture des informations stockées précédemment par le circuit de traitement 5 dans le condensateur C1.

Dans une troisième période illustrée à la figure 16, à la suite de cette lecture, l'information stockée dans le premier condensateur C1 est effacée en fermant le sixième interrupteur T6 simultanément au deuxième interrupteur T2. Le premier interrupteur T1 est ouvert afin de ne pas effacer les données présentes dans le troisième condensateur C3. Il est avantageux de continuer l'acquisition des données dans le condensateur C3.

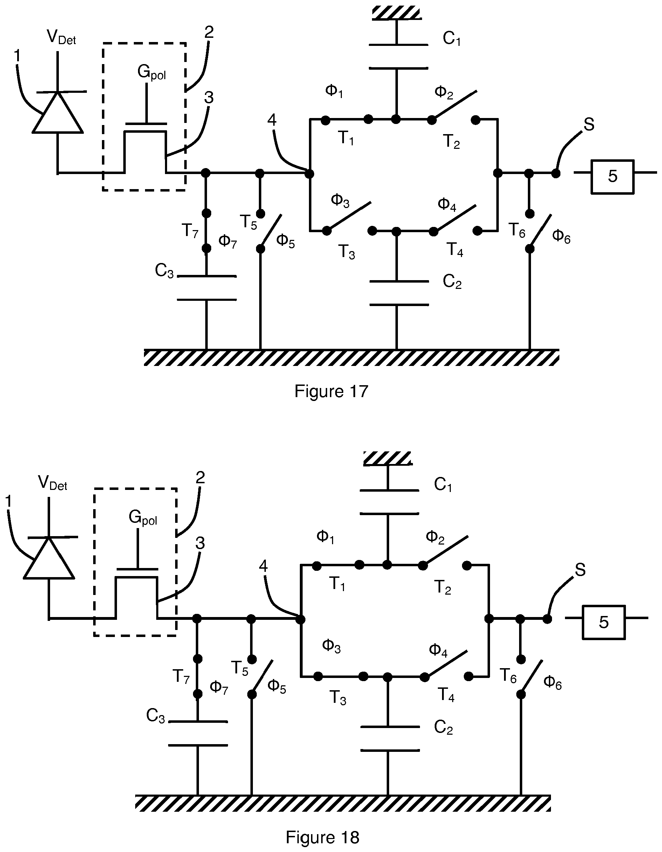

Dans une quatrième période illustrée à la figure 17, le premier interrupteur T1 est fermé en même temps que le septième interrupteur T7 de manière à réaliser un équilibre des charges entre les condensateurs C1 et C3. L'information contenue dans le condensateur C3 est partagée avec le condensateur C1.

Dans une nouvelle première période, le premier interrupteur T1 est ensuite ouvert et le troisième condensateur C3 est remis à zéro.

L'acquisition des données provenant du photodétecteur 1 est réalisée sur le troisième condensateur C3 et l'information est ensuite partagée avec le premier condensateur C1. La lecture de l'information par le circuit de traitement 5 est effectuée ensuite sur le premier condensateur C1. Comme indiqué précédemment, la lecture est réalisée pendant au moins une partie de la deuxième période de temps. Dans ce mode de fonctionnement, une phase de lecture est réalisée en même temps qu'une phase d'acquisition. La lecture et l'acquisition sont effectuées sur des condensateurs différents.

Le deuxième condensateur C2 n'est pas connecté au premier condensateur C1, ni au troisième condensateur C3. Par exemple, durant les différentes périodes, le troisième interrupteur T3 est ouvert pour éviter de charger le deuxième condensateur C2.

Dans ce mode de fonctionnement, le gain est q/(C1+C3).

Dans un cas particulier, bien que le deuxième condensateur C2 ne soit pas utilisé pour stocker des données, il est avantageux de réaliser une remise à zéro du condensateur C2. Cette remise à zéro permet d'imposer périodiquement le potentiel du condensateur non utiliser et éviter la présence d'un potentiel flottant dans le circuit, source de défaillance aléatoire difficile à détecter.

Un exemple de réalisation est le suivant.

Le septième interrupteur T7 est fermé en continu. Le deuxième interrupteur T2 est fermé en continu. Le troisième interrupteur est ouvert en continu.

La remise à zéro du condensateur C1 est réalisée en fermant le sixième transistor T6. Durant la remise à zéro du condensateur C1, le quatrième transistor T4 est fermé pour réaliser la remise à zéro du condensateur C2.

Après la remise à zéro du deuxième condensateur C2, le quatrième interrupteur T4 est ouvert. Ensuite, le premier interrupteur T1 est fermé pour équilibrer les premier et troisième condensateurs. Le circuit de traitement est alors en mesure de lire l'information sur le premier condensateur C1.

Dans une variante de réalisation, le condensateur C2 est remis à zéro durant la remise à zéro du troisième condensateur C3. La remise à zéro du deuxième condensateur C2 peut être réalisée en fermant simultanément le troisième interrupteur T3 et le cinquième interrupteur T5.

Dans les modes de réalisation précédents, la lecture sur le condensateur C1 est réalisée pendant l'acquisition sur le condensateur C3 ce qui permet une fréquence d'acquisition élevée. Il est possible d'atteindre des fréquences d'acquisition plus faibles en augmentant, la durée de la remise à zéro du condensateur C3. Il est alors avantageux de réaliser la remise à zéro du condensateur C3 au moins pendant toute la phase de lecture du condensateur C1. De cette manière, une acquisition de données est suivie par une phase de lecture. La phase d'acquisition suivante n'est réalisée qu'après la fin de la lecture des données.

Un autre mode de fonctionnement peut être obtenu en transférant les charges accumulées dans le condensateur C3 vers le condensateur C2. Le gain de ce mode de fonctionnement est $q/(C3+C2)$. Les actionnements des premier et troisième interrupteurs sont intervertis. Il en est de même pour les actionnements des deuxième et quatrième interrupteurs. Ce mode de réalisation n'est pas représenté.

Si les condensateurs C1 et C2 ont des valeurs différentes de capacité électriques. Le dispositif de détection peut proposer deux valeurs différentes de gain $q/(C3+C1)$ ou $q/(C3+C2)$.

Dans un nouveau mode de fonctionnement correspondant au premier mode revendiqué, un nouveau gain est obtenu en couplant électriquement les condensateurs C1, C2 et C3. Le gain est alors $q/(C1+C2+C3)$.

Comme précédemment, la phase d'acquisition est réalisée en stockant les charges dans le condensateur C3 puis en réalisant un équilibrage des charges avec les condensateurs C1 et C2. La lecture est ensuite réalisée en lisant la tension sur les condensateurs C1 et C2 ou sur un des condensateurs C1 et C2.

Le fonctionnement peut être décrit de la manière suivante, durant une première période de temps, le troisième condensateur C3 est remis à zéro en fermant simultanément le cinquième et le septième interrupteurs T5 et T7. Cette étape est illustrée à la figure 14.

Dans une deuxième période de temps, le septième interrupteur T7 est fermé et les premier et troisième interrupteurs T1 et T3 sont ouverts ce qui autorise un stockage des charges électriques dans le condensateur C3 uniquement. Cette étape est illustrée à la figure 15.

Durant au moins une partie de la deuxième période de temps, le deuxième interrupteur T2 est fermé ce qui autorise la lecture des informations stockées précédemment par le circuit de traitement 5 dans les condensateurs C1 et/ou C2.

A la suite de cette lecture, l'information stockée dans le premier condensateur C1 et dans le deuxième condensateur C2 est effacée en fermant le sixième interrupteur T6 simultanément au deuxième interrupteur T2 et au quatrième interrupteur T4. Le premier interrupteur T1 est ouvert afin de ne pas effacer les données présentes dans le troisième condensateur C3. Il est également possible d'effacer les données du premier condensateur C1 puis les données du deuxième condensateur C2 ou inversement.

Dans une troisième période illustrée à la figure 18, le premier interrupteur T1 et le troisième interrupteur T3 sont fermés en même temps que le septième interrupteur T7 de manière à réaliser un équilibre des charges entre les condensateurs C1, C2 et C3.

La connexion du troisième condensateur C3 avec les premier et deuxième condensateurs C1 et C2 peut être réalisée en fermant simultanément le premier interrupteur T1, le troisième interrupteur T3 et le septième interrupteur T7. En variante, il est possible de fermer simultanément, le premier interrupteur T1, le deuxième interrupteur T2, le quatrième interrupteur T4 et le septième interrupteur T7.

Comme les trois condensateurs C1, C2 et C3 partagent la même information, le circuit de traitement 5 peut lire l'information sur le premier condensateur C1 ou sur le deuxième condensateur C2. La lecture d'une donnée dans le premier et/ou le deuxième condensateurs (C1, C2) peut être réalisée lors de l'acquisition d'une nouvelle donnée dans le condensateur C3.

Dans cette configuration, il est possible de commander les premier et troisième interrupteurs T1 et T3 en synchronisme. Il peut en être de même pour les deuxième et quatrième interrupteurs T2 et T4. Il est également possible de laisser continument le premier ou le troisième interrupteur à l'état ouvert. Dans ce dernier cas, il est également avantageux de laisser continument les deuxième et quatrième interrupteurs à l'état fermé.

Comme dans un mode de réalisation précédent, il est possible de conditionner l'acquisition d'une nouvelle donnée à la lecture de la donnée précédente en réalisant la remise à zéro du condensateur C3 durant tout le temps où la lecture de l'information dans les condensateurs C1 et/ou C2 est réalisée.

Dans un nouveau mode de fonctionnement correspondant au troisième mode revendiqué avec un gain différent des modes de réalisation précédents, l'acquisition des données est divisée en deux périodes P1 et P2.

Les valeurs des deux périodes sont choisies en fonction de la valeur de capacité électrique des deux condensateurs C1 et C2 de sorte que si un courant identique est fourni sur les périodes P1 et P2, une tension identique est présente aux bornes des deux condensateurs C1 et C2 soit C1/P1 = C2/P2.

Ce mode de réalisation est particulièrement avantageux si C1=C2 car alors P1=P2 ce qui facilite la mise en œuvre du dispositif de détection. Le gain de cette configuration est q/(2*(C1+C3)) ou q/(C1+C2+2*C3).

Durant une première période de temps, le troisième condensateur C3 est remis à zéro en fermant simultanément le cinquième et le septième interrupteurs T5 et T7. Cette première période est illustrée à la figure 14.

Dans une deuxième période de temps, le septième interrupteur T7 est fermé et les premier et troisième interrupteurs T1 et T3 sont ouverts ce qui autorise un stockage des charges électriques dans le condensateur C3 uniquement. Cette deuxième période est illustrée à la figure 15.

Dans une troisième période, le premier interrupteur T1 est fermé en même temps que le septième interrupteur T7 de manière à réaliser un équilibre des charges entre les condensateurs C1 et C3. Cette troisième période est illustrée à la figure 17.

Dans une quatrième période, le condensateur C1 est ensuite découplé du condensateur C3 en ouvrant le premier interrupteur T1.

Dans une cinquième période, le condensateur C3 est ensuite remis à zéro en fermant simultanément le cinquième et le septième interrupteurs T5 et T7 (figure 14).

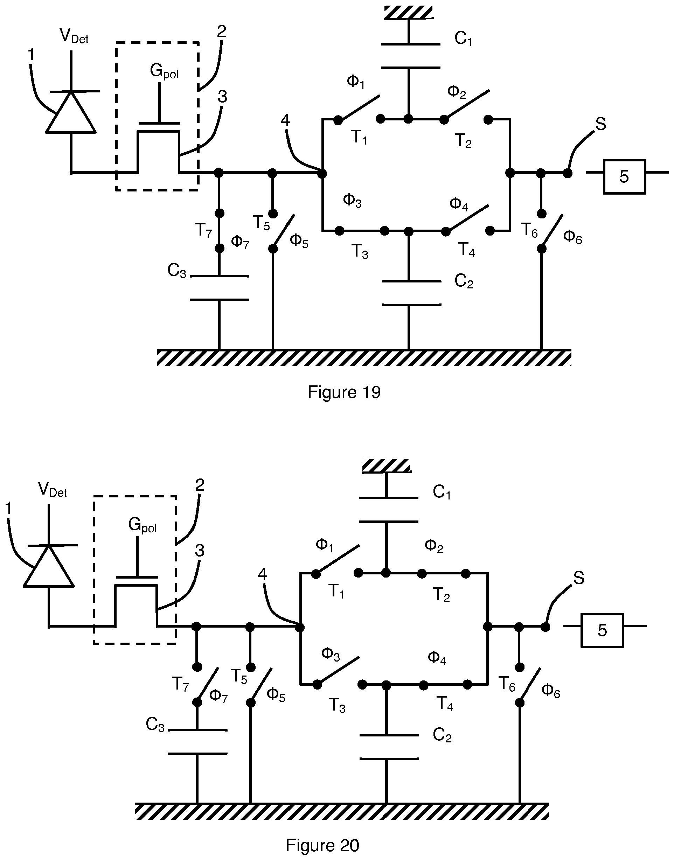

Dans une sixième période, le septième interrupteur T7 est fermé et les premier et troisième interrupteurs T1 et T3 sont ouverts ce qui autorise un stockage des charges électriques dans le condensateur C3 uniquement (figure 15). Dans une septième période illustrée à la figure 19, le troisième interrupteur T3 est fermé en même temps que le septième interrupteur T7 de manière à réaliser un équilibre des charges entre les condensateurs C2 et C3.

Dans une huitième période illustrée à la figure 20, les capacités C1 et C2 sont montées en parallèle en ouvrant les premier et troisième interrupteurs et en fermant les deuxième et quatrième interrupteurs. La connexion des capacités C1 et C2 permet de réaliser un équilibre des charges électriques. La première phase d'acquisition est stockée dans le premier condensateur C1, la deuxième phase d'acquisition est stockée dans le deuxième condensateur C2.

L'information stockée dans le premier condensateur C1 et dans le deuxième condensateur C2 est lue par le circuit de traitement 5.

Ce mode de réalisation est particulièrement avantageux, car si le courant est constant sur les deux phases d'acquisition, le bruit du signal est divisé par $\sqrt{2}$

. Le rapport signal à bruit correspond à une architecture ayant un condensateur équivalent égal à C3+C2+C3+C1 alors que l'architecture comporte un condensateur C3 et un condensateur C1 et un condensateur C2. Dans la première phase, on stocke Q1 charges dans les condensateurs C1 et C3. La tension est alors Q1/(C1+C3). Dans la deuxième phase, on stocke Q2 charges dans C2 et C3. La tension est alors Q2/(C2+C3). La mise en parallèle de C1 et C2 permet un équilibre des charges. Si Q1=Q2 et C1=C2, on remarque que la tension mesurée ne bouge pas lors de l'équilibrage mais le bruit est divisé par $\sqrt{2}$ .

A la suite de cette lecture, l'information stockée dans le premier condensateur C1 et dans le deuxième condensateur C2 est effacée en fermant le sixième interrupteur T6 simultanément au deuxième interrupteur T2 et au quatrième interrupteur T4. Le premier interrupteur T1 est ouvert afin de ne pas effacer les données présentes dans le troisième condensateur C3. Il est également possible d'effacer les données du premier condensateur C1 puis les données du deuxième condensateur C2 ou inversement.

Le détecteur 1 transformant un rayonnement lumineux en un courant électrique, un photodétecteur, peut être, par exemple, une photodiode qui est avantageusement polarisée en inverse pour générer un courant. A titre d'exemple, le détecteur 1 est associé à la gamme de longueur d'onde LWIR comprise entre 8 et 14$\mu$m. Pour une longueur d'onde LWIR, le photodétecteur opère généralement à une température de 77K. Le détecteur 1 peut également être associé à la gamme de longueur d'onde MWIR comprise entre 3 et 5 $\mu$m. Dans cette gamme, le photodétecteur opère généralement à une température comprise entre 130K et 200K.

De cette manière, le courant émis par le détecteur 1 traverse successivement le transistor de commande 2 par ses première et seconde bornes d'entrée/sortie pour atteindre les condensateurs C1, C2 et/ou C3.

Dans un mode de réalisation avantageux, le circuit de traitement 5 est mutualisé, par exemple le circuit de traitement est connecté à quatre pixels par l'intermédiaire de quatre interrupteurs. L'acquisition des données peut être réalisée simultanément pour tous les pixels et la lecture des données est réalisée de manière successive, c'est-à-dire un pixel après l'autre.

Afin de mettre en œuvre les différents modes de fonctionnement décrits, le dispositif de détection comporte des moyens de contrôle des interrupteurs qui commande la synchronisation des ouvertures et de fermetures des différents interrupteurs. Pour des raisons de clarté, les moyens de contrôle des interrupteurs électroniques sont représentés par les signaux associés aux interrupteurs.

Les différents interrupteurs peuvent être réalisés par des transistors, par exemple, à effet de champ.

La durée d'intégration correspondant à la durée de transfert des charges depuis le photodétecteur 1 vers un des condensateurs est de l'ordre de 1.10$^{-3}$s, ce qui permet d'atteindre des fréquences de lecture de l'ordre de 1kHz.

Il est possible d'utiliser un nombre plus important de condensateurs pour obtenir un circuit avec un plus grand nombre de gains différents. Il est alors avantageux de placer un condensateur additionnel en dérivation du troisième condensateur. Il est également possible de rajouter une nouvelle ligne de transit en dérivation des deux précédentes. Cette nouvelle ligne de transit comporte deux interrupteurs montés en série et le condensateur additionnel est connecté d'une part à une source de tension spécifique et d'autre part entre les deux interrupteurs.

Le nombre de condensateurs peut être pair ou impair.

## Revendications

1.  Dispositif de détection, comportant

    - un photodétecteur (1),
    - un circuit de polarisation (2) configuré pour polariser le photodétecteur (1),
    - une charge capacitive d'intégration (4) configurée pour stocker des charges électriques émises par le photodétecteur (1),
    - une borne de sortie (S) couplée à la charge capacitive d'intégration (4) et destinée à être connectée à un circuit de traitement (5),

    la charge capacitive d'intégration (4) étant configurée pour présenter différentes valeurs de capacité électrique et comportant :

    - au moins des première et deuxième lignes de transit montées en dérivation entre le photodétecteur (1) et la borne de sortie (S), la première ligne de transit comprenant des premier et deuxième interrupteurs (T1, T2) montés en série, la deuxième ligne de transit comprenant des troisième et quatrième interrupteurs (T3, T4) montés en série,
    - un premier condensateur (C1) ayant une première électrode connectée entre les premier et deuxième interrupteurs (T1, T2) et une deuxième électrode connectée à une première source de tension prédéfinie,
    - un deuxième condensateur (C2) ayant une première électrode connectée entre les troisième et quatrième interrupteurs (T3, T4) et une deuxième électrode connectée à une deuxième source de tension prédéfinie,
    - un troisième condensateur (C3) monté en série avec un interrupteur spécifique (T7) entre une troisième source de tension prédéfinie et la connexion entre le premier interrupteur (T1) et le troisième interrupteur (T3),
    - des moyens de remise à zéro des premier, deuxième et troisième condensateurs indépendamment, les première, deuxième et troisième sources de tension prédéfinie étant configurées pour délivrer la même tension et les moyens de remise à zéro des premier, deuxième et troisième condensateurs comportant un sixième interrupteur (T6) connecté entre la source de tension prédéfinie et la borne de sortie et un cinquième interrupteur (T5) connecté en parallèle du montage série formé par le troisième condensateur (C3) et l'interrupteur spécifique (T7),

    le dispositif de détection comportant des moyens de contrôle des interrupteurs configurés pour réaliser au moins l'un des premier, deuxième et troisième modes de fonctionnement, dans lequel dans le premier mode de fonctionnement

    - les charges émises par le photodétecteur (1) sont stockées dans le troisième condensateur (C3),
    - les charges stockées dans le troisième condensateur (C3) sont équilibrées avec les premier et deuxième condensateurs (C1, C2) montés en parallèle,
    - le circuit de traitement (5) lit les informations stockées dans le premier et/ou le deuxième condensateurs (C1, C2)

    dans lequel dans le deuxième mode de fonctionnement

    - les charges émises par le photodétecteur (1) sont stockées dans le troisième condensateur (C3),
    - les charges stockées dans le troisième condensateur (C3) sont équilibrées avec le premier condensateur (C1),
    - le troisième condensateur (C3) est déconnecté du premier condensateur et est remis à zéro,
    - les charges émises par le photodétecteur (1) sont stockées dans le troisième condensateur (C3),
    - les charges stockées dans le troisième condensateur (C3) sont équilibrées avec le premier condensateur (C1) et le deuxième condensateur (C2) montés en parallèle,

    le circuit de traitement (5) lisant successivement les informations enregistrées dans le premier condensateur (C1) et les informations stockées dans le premier et le deuxième condensateurs (C1, C2),

    et dans lequel dans le troisième mode de fonctionnement

    - les charges émises par le photodétecteur (1) sont stockées dans le troisième condensateur (C3),
    - les charges stockées dans le troisième condensateur (C3) sont équilibrées avec le premier condensateur (C1),
- le troisième condensateur (C3) est déconnecté du premier condensateur (C1) et est remis à zéro,
- les charges émises par le photodétecteur (1) sont stockées dans le troisième condensateur (C3),
- les charges stockées dans le troisième condensateur (C3) sont équilibrées avec le deuxième condensateur (C2),

le circuit de traitement (5) lisant les informations stockées dans le premier condensateur (C1) durant au moins une partie du stockage des charges dans le deuxième condensateur (C2) et lisant les informations stockées dans le deuxième condensateur (C2) durant au moins une partie du stockage des charges dans le premier condensateur (C1).

2. Dispositif de détection selon la revendication 1, **caractérisé en ce que**, dans le premier mode de fonctionnement, la lecture par le circuit de traitement (5) est réalisée durant au moins une partie de la période de temps relative au stockage des charges dans le troisième condensateur (C3).

3. Dispositif de détection selon la revendication 2, **caractérisé en ce que** la remise à zéro des premier et deuxième condensateurs (C1, C2) est réalisée durant au moins une partie de la période de temps relative au stockage des charges dans le troisième condensateur (C3).

4. Dispositif de détection selon l'une quelconque des revendications 1 à 3, **caractérisé en ce que** la valeur de la capacité électrique du premier condensateur (C1) est égale à la valeur de la capacité électrique du deuxième condensateur (C2).

5. Dispositif de détection selon l'une quelconque des revendications 1 à 4, **caractérisé en ce qu'**il comporte une seule borne de sortie.

6. Dispositif de détection selon l'une quelconque des revendications 1 à 5, **caractérisé en ce que** la borne de sortie (S) est définie par une borne commune aux deuxième et quatrième interrupteurs (T2, T4).

7. Dispositif de détection selon l'une quelconque des revendications 1 à 6, **caractérisé en ce que** le troisième condensateur (C3) est uniquement connecté à la borne de sortie (S) au moyen des première et deuxième lignes de transit.

**Patentansprüche**

1. Detektionsvorrichtung, umfassend:

- einen Fotodetektor (1),
- eine Polarisationsschaltung (2), die eingerichtet ist, um den Fotodetektor (1) zu polarisieren,
- eine kapazitive Integrationsschaltung (4), die eingerichtet ist, um von dem Fotodetektor (1) entsandte elektrische Ladungen zu speichern,
- eine Ausgangsklemme (S), die an die kapazitive Integrationsladung (4) gekoppelt und dazu bestimmt ist, an eine Verarbeitungsschaltung (5) angeschlossen zu werden,

wobei die kapazitive Integrationsladung (4) eingerichtet ist, um verschiedene elektrische Kapazitätswerte aufzuweisen, und umfassend:

- mindestens erste und zweite Transitlinien, die verzweigt zwischen dem Fotodetektor (1) und der Ausgangsklemme (S) montiert sind, wobei die erste Transitlinie erste und zweite Schalter (T1, T2) umfasst, die in Serie geschaltet sind, wobei die zweite Transitlinie dritte und vierte Schalter (T3, T4) umfasst, die in Serie geschaltet sind,
- einen ersten Kondensator (C1), der eine erste Elektrode hat, die zwischen den ersten und zweiten Schaltern (T1, T2) angeschlossen ist, und eine zweite Elektrode, die an eine erste vordefinierte Spannungsquelle angeschlossen ist,
- einen zweiten Kondensator (C2), der eine erste Elektrode hat, die zwischen den dritten und vierten Schaltern (T3, T4) angeschlossen ist, und eine zweite Elektrode, die an eine zweite vordefinierte Spannungsquelle angeschlossen ist,
- einen dritten Kondensator (C3), der in Serie mit einem spezifischen Schalter (T7) zwischen einer dritten vordefinierten Spannungsquelle und dem Anschluss zwischen dem ersten Schalter (T1) und dem dritten Schalter (T3) montiert ist,
- Mittel zum Rücksetzen der ersten, zweiten und dritten Kondensatoren unabhängig voneinander, wobei die erste, zweite und dritte vordefinierten Spannungsquellen eingerichtet sind, um dieselbe Spannung zu liefern, und wobei die Mittel zum Rücksetzen der ersten, zweiten und dritten Kondensatoren einen sechsten Schalter (T6) umfassen, der zwischen der vordefinierten Spannungsquelle und der Ausgangsklemme angeschlossen ist, und einen fünften Schalter (T5), der parallel zur seriellen Montage, die von dem dritten Kondensator (C3) und dem spezifischen Schalter (T7) gebildet ist, angeschlossen ist,
wobei die Detektionsvorrichtung Mittel zur Steuerung der Schalter umfasst, die eingerichtet sind, um mindestens einen der ersten, zweiten und dritten Funktionsmodi zu verwirklichen, wobei bei dem ersten Funktionsmodus

- die von dem Fotodetektor (1) entsandten Ladungen in dem dritten Kondensator (C3) gespeichert werden,
- die in dem dritten Kondensator (C3) gespeicherten Ladungen mit den ersten und zweiten parallel montierten Kondensatoren (C1, C2) ausgeglichen werden,
- die Verarbeitungsschaltung (5) die in dem ersten und/oder dem zweiten Kondensator (C1, C2) gespeicherten Informationen liest,

wobei bei dem zweiten Funktionsmodus

- die von dem Fotodetektor (1) entsandten Ladungen in dem dritten Kondensator (C3) gespeichert werden,
- die in dem dritten Kondensator (C3) gespeicherten Ladungen mit dem ersten Kondensator (C1) ausgeglichen werden,
- der dritte Kondensator (C3) vom ersten Kondensator getrennt und zurückgesetzt wird,
- die von dem Fotodetektor (1) entsandten Ladungen in dem dritten Kondensator (C3) gespeichert werden,
- die in dem dritten Kondensator (C3) gespeicherten Ladungen mit dem ersten Kondensator (C1) und dem zweiten Kondensator (C2), die parallel montiert sind, ausgeglichen werden,

wobei die Verarbeitungsschaltung (5) nacheinander die in dem ersten Kondensator (C1) aufgezeichneten Informationen und die in den ersten und zweiten Kondensatoren (C1, C2) gespeicherten Informationen liest,

und wobei bei dem dritten Funktionsmodus

- die von dem Fotodetektor (1) entsandten Ladungen in dem dritten Kondensator (C3) gespeichert werden,
- die in dem dritten Kondensator (C3) gespeicherten Ladungen mit dem ersten Kondensator (C1) ausgeglichen werden,
- der dritte Kondensator (C3) vom ersten Kondensator (C1) getrennt und zurückgesetzt wird,
- die von dem Fotodetektor (1) entsandten Ladungen in dem dritten Kondensator (C3) gespeichert werden,
- die in dem dritten Kondensator (C3) gespeicherten Ladungen mit dem zweiten Kondensator (C2) ausgeglichen werden,

wobei die Verarbeitungsschaltung (5) die in dem ersten Kondensator (C1) gespeicherten Informationen während mindestens eines Teils der Speicherung der Ladungen in dem zweiten Kondensator (C2) liest, und die in dem zweiten Kondensator (C2) gespeicherten Ladungen während mindestens eines Teils der Speicherung der Ladungen in dem ersten Kondensator (C1) liest.

**2.** Detektionsvorrichtung nach Anspruch 1, **dadurch gekennzeichnet, dass** beim ersten Funktionsmodus das Lesen durch die Verarbeitungsschaltung (5) während mindestens eines Teils des Zeitraums, der sich auf die Speicherung der Ladungen in dem dritten Kondensator (C3) bezieht, erfolgt.

**3.** Detektionsvorrichtung nach Anspruch 2, **dadurch gekennzeichnet, dass** das Zurücksetzen der ersten und zweiten Kondensatoren (C1, C2) während mindestens eines Teils des Zeitraums, der sich auf die Speicherung der Ladungen in dem dritten Kondensator (C3) bezieht, erfolgt.

**4.** Detektionsvorrichtung nach einem der Ansprüche 1 bis 3, **dadurch gekennzeichnet, dass** der Wert der elektrischen Kapazität des ersten Kondensators (C1) gleich dem Wert der elektrischen Kapazität des zweiten Kondensators (C2) ist.

**5.** Detektionsvorrichtung nach einem der Ansprüche 1 bis 4, **dadurch gekennzeichnet, dass** er nur eine Ausgangsklemme umfasst.

**6.** Detektionsvorrichtung nach einem der Ansprüche 1 bis 5, **dadurch gekennzeichnet, dass** die Ausgangsklemme (S) durch eine den zweiten und vierten Schaltern (T2, T4) gemeinsame Klemme definiert ist.

**7.** Detektionsvorrichtung nach einem der Ansprüche 1 bis 6, **dadurch gekennzeichnet, dass** der dritte Kondensator (C3) nur an die Ausgangsklemme (S) mit Hilfe der ersten und zweiten Transitlinien angeschlossen ist.

**Claims**

**1.** Detection device, comprising

- a photodetector (1)
- a biasing circuit (2) configured to bias the photodetector (1),
- an integration capacitive load (4) configured to store electrical charges emitted by the photodetector (1),
- an output terminal (S) coupled to the integration capacitive load (4) and designed to be connected to a processing circuit (5),

the integration capacitive load (4) being configured to present different values of electrical capacity and comprising:

- at least first and second transit lines branch mounted between the photodetector (1) and the output terminal (S), the first transit line including the first and second switches (T1, T2) series mounted, the second transit line comprising of the third and fourth switches (T3, T4) series mounted,

- a first capacitor (C1) having a first electrode connected between the first and second switches (T1, T2) and a second electrode connected to a first source of predefined voltage,

- a second capacitor (C2) having a first electrode connected between the third and fourth switches (T3, T4) and a second electrode connected to a second source of predefined voltage,

- a third capacitor (C3) series mounted with a specific switch (T7) between a third source of predefined voltage and the connection between the first switch (T1) and the third switch (T3),

- means for resetting the first, second and third capacitors independently, the first, second and third sources of predefined voltage being configured to provide the same voltage and the means for resetting the first, second and third capacitors comprising un sixth switch (T6) connected between the source of predefined voltage and the output terminal and a fifth switch (T5) connected in parallel to the third capacitor (C3) and the specific switch (T7) series mounted,

the detection device comprising switches control means configured to realize at least one of the first, second and third operating mode, wherein in the first operating mode

- the charges emitted by the photodetector (1) are stored in the third capacitor (C3),

- the charges stored in the third capacitor (C3) are balanced with the first and second capacitors (C1, C2) mounted in parallel,

- the processing circuit (5) reads the information stored in the first and/or second capacitors (C1, C2)

wherein in the second operating mode

- the charges emitted by the photodetector (1) are stored in the third capacitor (C3),

- the charges stored in the third capacitor (C3) are balanced with the first capacitor (C1),

- the third capacitor (C3) is disconnected from the first capacitor and is reset,

- the charges emitted by the photodetector (1) are stored in the third capacitor (C3),

- the charges stored in the third capacitor (C3) are balanced with the first and second capacitors (C1, C2) mounted in parallel,

the processing circuit (5) successively reading the information stored in the first capacitor (C1) and the information stored in the first and second capacitors (C1, C2),

and wherein in the third operating mode

- the charges emitted by the photodetector (1) are stored in the third capacitor (C3),

- the charges stored in the third capacitor (C3) are balanced with the first capacitor (C1),

- the third capacitor (C3) is disconnected from the first capacitor (C1) and is reset,

- the charges emitted by the photodetector (1) are stored in the third capacitor (C3),

- the charges stored in the third capacitor (C3) are balanced with the second capacitor (C2),

the processing circuit (5) reading the information stored in first capacitor (C1) during at least one portion of the storage of charges in second capacitor (C2) and the reading of information stored in the second capacitor (C2) during at least one portion of the storage of charges in the first capacitor (C1).

2. Detection device according to claim 1, **characterised in that**, in the first operating mode, reading by processing circuit (5) is carried out during at least one portion of the time period relating to the storage of charges in the third capacitor (C3).

3. Detection device according to claim 2, **characterised in that** the reset of the first and second capacitors (C1, C2) is carried out during at least one portion of the time period relating to the storage of charges in the third capacitor (C3).

4. Detection device according to any one of claims 1 to 3, **characterised in that** the value of the electrical capacity of the first capacitor (C1) is equal to the value of the electrical capacity of the second capacitor (C2).

5. Detection device according to any one of claims 1 to 4, **characterised in that** it comprises a single output terminal.

6. Detection device according to any one of claims 1 to 5, **characterised in that** the output terminal (S) is defined by a terminal common to the second and fourth transistors (T2, T4).

7. Detection device according to any one of claims 1 to 6, **characterised in that** the third capacitor (C3) is connected only to the output terminal (S) by means of the first and second transit lines.

Figure 1

Figure 2

Figure 3

Figure 4

Figure 5

Figure 6

Figure 7

Figure 8

Figure 9

Figure 10

Figure 11

Figure 12

Figure 13

Figure 14

Figure 15

Figure 16

Figure 17

Figure 18

Figure 19

Figure 20

**EP 3 114 442 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004074789 A1

- US 2006158542 A1